# FASCICULE DE BREVET EUROPEEN

(11) **EP 0 962 038 B1**
(45) Date de publication et mention de la délivrance du brevet: **04.10.2001**
(21) Numéro de dépôt: 98962541.3
(22) Date de dépôt: 22.12.1998
(51) Int. Cl.: H02B 1/048

(54) **DISPOSITIF DE FIXATION D'UN APPAREIL ENCASTRE**
VORRICHTUNG ZUM BEFESTIGEN EINES EINGEBAUTEN GERÄTES
DEVICE FOR FIXING A BUILT-IN APPARATUS

(30) Priorité: 24.12.1997 FR 9716823
(43) Date de publication de la demande: 08.12.1999
(73) Titulaire: Schneider Electric Industries SA, 92500 Rueil-Malmaison (FR)
(72) Inventeur: LAFAYE, Michel, F-16800 Soyaux (FR); PITAULT, Gérard, Magnac, 16600 Ruelle (FR)
(86) Numéro de dépôt international: FR9802841
(87) Numéro de publication internationale: WO9934490

(56) Documents cités:
- DE-A- 2 236 766
- FR-A- 2 718 798

## Description

La présente invention concerne un dispositif de fixation d'un appareil encastrable dans une ouverture de panneau, à l'aide de verrous constitués chacun par une embase se fixant à l'appareil, par un piston coulissant destiné à venir en contact avec le panneau sous l'action de ressorts de compression.

Elle s'applique notamment à l'encastrement d'un boîtier d'appareil électrique ou électronique (par exemple d'un appareil de commande et/ou de visualisation) dans une fenêtre d'un panneau de telle sorte que seule la face antérieure du boîtier soit visible de l'extérieur.

Le corps du boîtier, dont la section est sensiblement égale à celle de la fenêtre dans laquelle il vient s'engager, comprend habituellement un rebord périphérique qui sert de butée, en fin de course d'encastrement du boîtier, et d'autre part de couvre-joint masquant la jonction entre le boîtier et le panneau.

De nombreuses solutions ont été proposées pour assurer le verrouillage du boîtier sur le panneau lorsque le boîtier se trouve en position encastrée. Le document FR 2 718 798 décrit un dispositif de verrouillage fonctionnant à l'aide de verrous élastiques constitués par une semelle de fixation et par un poussoir d'appui coulissant soumis à des moyens élastiques prenant appui sur la semelle de fixation. La semelle de fixation se fixe sur des parois latérales du boîtier de l'appareil tandis que le poussoir d'appui vient buter sur l'arrière du panneau.

L'invention a pour but de proposer des verrous pour lesquels la commande de verrouillage s'effectue facilement par simple pression entre les doigts, sans outil spécial. Ces verrous s'adaptent à des panneaux d'encastrement d'épaisseurs différentes.

Selon l'invention, le dispositif de verrouillage est caractérisé par le fait que le piston comporte des poussoirs de clipsage débouchant dans des lumières de l'embase, permettant l'accrochage du piston sur l'embase en position de repos, et au déclenchement du verrouillage en libérant le piston.

L'invention va maintenant être décrite en se référant à un mode de réalisation de l'invention donné à titre d'exemple non limitatif et se référant aux dessins annexés dans lesquels :
- La figure 1 est une vue en perspective montrant l'appareil encastrable et un des verrous de fixation;
- La figure 2 est une vue en perspective arrière montrant l'appareil en position d'encastrement et un des verrous de fixation;
- La figure 3 est une vue en perspective éclatée d'un verrou de fixation;

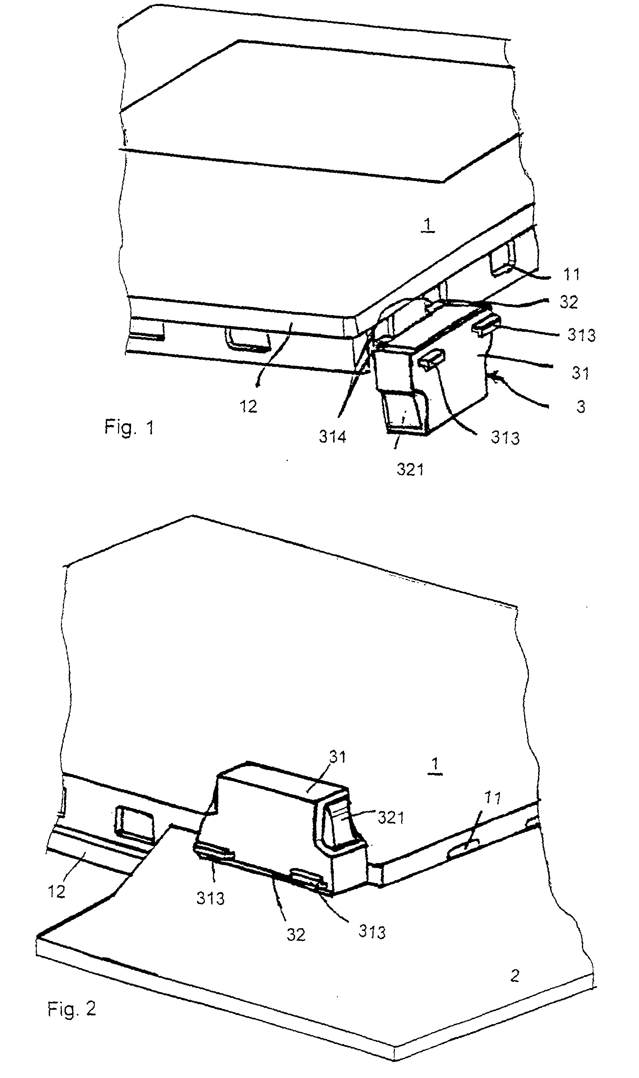

- La figure 2 est une coupe axiale du verrou;

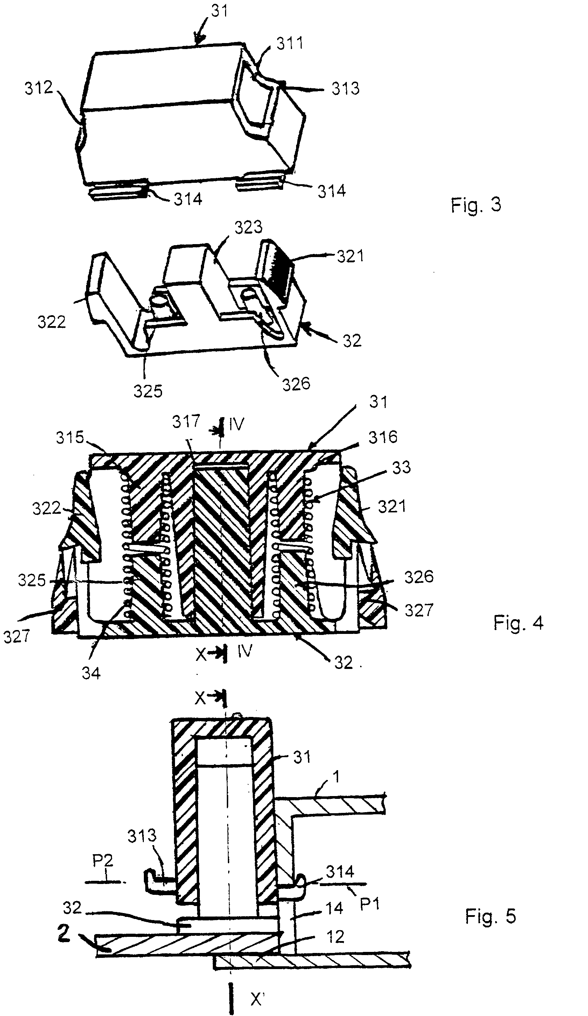

- La figure 5 est une coupe selon IV-IV de la figure 4 montrant le verrou en position de verrouillage.

Le dispositif selon l'invention assure la fixation d'un appareil électrique ou électronique encastrable 1 dans une fenêtre d'un panneau 2 à l'aide de verrous de fixation 3. Cet appareil est par exemple un terminal et présente, en face avant, des composants de commande et de visualisation (non représentés).

Chaque verrou élastique 3 se compose d'une embase 31 se fixant à l'appareil, d'un piston coulissant 32 destiné à venir en contact avec le panneau et de ressorts de compression 33 et 34 montés entre ces deux pièces.

L'embase 31, en forme de coquille, sert au logement du piston 32. Elle présente, en partie centrale, un alésage borgne 317 servant au guidage du piston 32 et elle est découpée, sur les côtés, par deux lumières 312 et 313. L'embase comporte près de la face de contact du poussoir, sur un côté, deux premiers crochets 313 et, de l'autre côté, deux seconds crochets 314, ces premiers et seconds crochets étant utilisés de manière alternative pour la fixation sur l'appareil. On expliquera plus loin la fonction de ces différents crochets.

Le piston 32 présente, en partie centrale, un tenon de guidage 323 qui est engagé en coulissant dans le logement conjugué 317 et ,sur les côtés, deux lames élastiques qui se terminent par des poussoirs de manoeuvre 321 et 322 servant à accrocher le piston en position de repos et à déclencher le verrouillage. En position de repos représentée à la figure 4; les poussoirs 321 et 322 affleurent dans les lumières 311 et 312 et s'accrochent sur les rebords de ces lumières. Le piston 32 peut coulisser dans la coquille 31 pour avancer, en dehors de la coquille, sous l'effet des ressorts et cela dès que les poussoirs 321 et 322 sont été enfoncés, ceci par simple pression entre les doigts, et ont libéré ledit piston. L'enfoncement des poussoirs et le dégagement de ceux-ci vis à vis des rebords des lumières, sont permis par l'élasticité des lames élastiques portant les poussoirs.

Le mouvement du piston 32, dans le sens de la sortie par rapport à l'embase 1, est limité par les poussoirs 321 et 322 qui peuvent venir en butée sur des bossages 327 ménagés dans la coquille.

Deux bossages 315 et 316 servant au centrage des ressorts sont ménagés à l'intérieur de la coquille. De même, deux bossages 325 et 326 servant au centrage des ressorts sont ménagés sur le piston 32.

L'appareil encastrable 1 présente, sur les côtés, des lumières 11 permettant d'accrocher les verrous. Pour accrocher un verrou 3 sur un côté de l'appareil encastrable, on engage deux crochets 313 ou 314 dans deux lumières 11.

Si l'on se réfère à la figure 5, on note que les premiers crochets 313 et que les seconds crochets 314 se situent à des hauteurs différentes par rapport à l'axe X-X' de coulissement du piston.

Le fonctionnement va maintenant être expliqué.

L'appareil 1 est engagé, sans ses verrous associés, dans une ouverture du panneau 2 de manière que le rebord 12 de l'appareil vienne en butée sur la face avant dudit panneau.

Après encastrement de l'appareil 1 dans le panneau 2, on met en place les verrous 3 en engageant les crochets 313 ou 314 dans les lumières 11. Dans la position représentée à la figure 5, on note que le verrou 3 est assemblé à l'appareil 1 par les crochets 314 et qu'il ne peut pas basculer du fait qu'il est en appui contre cet appareil encastrable.

A ce stade du montage, les verrous 3 sont en position de repos, les pistons 32 étant rentrés dans leurs coquilles respectives.

En serrant, entre deux doigts, les poussoirs 321 et 322, on fait plier les lames flexibles portant ces poussoirs et on libère le piston 32. Celui-ci peut avancer, en sortant de la coquille, sous l'action des ressorts 33 et 34. L'avant de ce poussoir vient au contact de l'arrière du panneau 2. Il vient finalement occuper la position de verrouillage représentée à la figure 2 et à la figure 5.

Pour enlever les verrous 3 et dégager l'appareil 1, il suffit de rentrer les pistons 32 dans leurs coquilles 31, jusqu'à accrochage des poussoirs 321 et 322 dans les lumières 312 et 313.

Il est bien entendu que l'on peut sans sortir du cadre de l'invention imaginer des variantes et des perfectionnements de détail et de même envisager l'emploi de moyens équivalents.

## Revendications

1. Dispositif de fixation d'un appareil encastrable (1) dans une ouverture de panneau (2), à l'aide de verrous (3) constitués chacun par une embase (31) se fixant à l'appareil, par un piston coulissant (32) destiné à venir en contact avec le panneau (2) sous l'action de ressorts de compression (33 et 34), **caractérisé par** le fait que le piston (32) comporte des poussoirs de clipsage (321 et 322) débouchant dans des lumières (311, 312) de l'embase (31), permettant l'accrochage du piston (32) sur l'embase (31) en position de repos et au déclenchement du verrouillage en libérant le piston (32).

2. Dispositif de fixation selon la revendication 1, **caractérisé par** le fait qué l'embase (31) comporte sur un côté, au moins un premier crochet (313) servant à la fixation sur l'appareil (1) et, de l'autre côté, au moins un second crochet (314) servant de manière alternative à la fixation sur l'appareil (1), ledit premier crochet (313) et ledit second crochet (314) se situant à des hauteurs différentes par rapport à l'axe X-X' de coulissement du piston (32).

3. Dispositif de fixation selon l'une quelconque des revendications précédentes, **caractérisé par** le fait que le poussoir (321, 322) présente, en partie centrale, un tenon (323) engagé, de manière à coulisser, dans un logement de guidage conjugué (317) de l'embase (31) et, sur les côtés, deux lames élastiques qui se terminent par les poussoirs de manoeuvre (321 et 322).

4. Dispositif de fixation selon l'une quelconque des revendications précédentes, **caractérisé par** le fait que le mouvement du piston (32) dans le sens de la sortie par rapport à l'embase (31), est limité par les poussoirs (321 et 322) qui peuvent venir en butée sur des bossages (327) ménagés dans la coquille.

5. Dispositif de fixation selon l'une quelconque des revendications précédentes, **caractérisé par** le fait que l'embase (31) comporte deux bossages (315 et 316) servant au centrage des ressorts (33, 34) et que le piston (32) comporte deux bossages (325 et 326) servant au centrage des mêmes ressorts (33, 34).

## Claims

1. Attachment device for a fitting (1) designed to be flush mounted in a panel opening (2) using locks (3) each consisting of a base (31) that fits into the fitting, a sliding piston (32) that comes into contact with the panel (2) under the action of compression springs (33 and 34), **characterized by** the fact that the piston (32) comprises click fit pushers (321 and 322) that fit into slots (321, 322) on the base (32), so that the piston (32) fastens onto the base (31) in the rest position, and releases the piston (32) when the lock is released.

2. Attachment device according to claim 1, **characterized by** the fact that the base comprises at least one first hook (313) on one side used to attach the fitting, and at least one second hook (314) on the other side used alternatively to attach the fitting, the said first hook (313) and the said second hook (314) being located at different heights with respect to the X-X' axis along which the piston slides (32).

3. Attachment device according to any one of the previous claims, **characterized by** the fact that the central part of the pusher (321,322) is fitted with a tenon (323) that fits into and slides along the corresponding guiding housing (317) of the base (31), and two elastic strips on the sides that terminate in operating pushers (321 and 322).

4. Attachment device according to any one of the previous claims, **characterized by** the fact that the outwards movement of the piston (32) with respect to the base (31) is limited by pushers (321 and 322) that reach a limit stop on projections (327) formed in the shell.

5. Attachment device according to any one of the previous claims, **characterized by** the fact that the base (31) is provided with two projections (315 and 316) which center the springs (33, 34) and that the piston (32) comprises two projections (325 and 326) which center these springs (33,34).

## Patentansprüche

1. Befestigungsvorrichtung eines in einer Plattenöffnung (2) einbaubaren Gerätes (1) mittels Riegeln (3), die jeweils aus einem Sockel (31) bestehen, der mittels einem Schiebekolben (32) am Gerät befestigt wird, der sich unter der Wirkung von Druckfedern (33 und 34) mit der Platte in Kontakt versetzen soll, **dadurch gekennzeichnet, dass** der Kolben (32) Clip-Schieber (321 und 322) umfasst, die in Aussparungen (311, 312) des Sockels (31) münden und das Einhaken des Kolbens (32) am Sockel (31) in Ruhestellung ermöglichen sowie das Aushaken der Verriegelung durch Freisetzung des Kolbens (32).

2. Befestigungsvorrichtung nach Anspruch 1, **dadurch gekennzeichnet, dass** der Sockel (31) auf einer Seite mindestens einen Haken (313) zur Befestigung am Gerät und auf der anderen Seite mindestens einen zweiten Haken (314) zur abwechselnden Befestigung am Gerät umfasst, wobei der besagte erste Haken (313) und der besagte zweite Haken (314) in Bezug auf die Verschiebungsachse X-X' des Kolbens (32) in unterschiedlicher Höhe angeordnet sind.

3. Befestigungsvorrichtung nach einem der vorstehend genannten Ansprüche, **dadurch gekennzeichnet, dass** der Schieber (321,322) am mittleren Teil ein Ansatzstück (323) aufweist, das in einer dem Sockel (31) zugeordneten Führungsaufnahme (317) gleitet, und an den Seiten zwei elastische Lamellen, die mit Bedienungsschiebern (321 und 322) enden.

4. Befestigungsvorrichtung nach einem der vorstehend genannten Ansprüche, **dadurch gekennzeichnet, dass** die Bewegung des Kolbens (32) in Ausgangsrichtung in Bezug auf den Sockel (31) von den Schiebern (321 und 322) begrenzt wird, die gegen in der Schale vorgesehene Buckel (327) anschlagen können.

5. Befestigungsvorrichtung nach einem der vorstehend genannten Ansprüche, **dadurch gekennzeichnet, dass** der Sockel (31) zwei Buckel (315 und 316) zum Zentrieren der Federn (33, 34) aufweist, und **dass** der Kolben (32) zwei Buckel (325 und 326) zur Zentrierung der gleichen Federn (33,34) umfasst.
